Europäisches Patentamt

European Patent Office

Office européen des brevets

(19)

(11) Numéro de publication : **0 324 697 B1**

(12) **FASCICULE DE BREVET EUROPEEN**

(45) Date de publication du fascicule du brevet :
**16.09.92 Bulletin 92/38**

(51) Int. Cl.⁵ : **A47J 19/02, B30B 9/04**

(21) Numéro de dépôt : **89400114.8**

(22) Date de dépôt : **13.01.89**

(54) **Pressoir de denrées.**

(30) Priorité : **14.01.88 FR 8800367**

(43) Date de publication de la demande :
**19.07.89 Bulletin 89/29**

(45) Mention de la délivrance du brevet :
**16.09.92 Bulletin 92/38**

(84) Etats contractants désignés :
**AT BE CH DE ES FR GB GR IT LI LU NL SE**

(56) Documents cités :
**DE-C- 1 231 861
FR-A- 2 438 539
FR-E- 62 370
GB-A- 2 018 170
US-A- 3 108 533
US-A- 4 080 860**

(73) Titulaire : **SOCIETE SOMATIC**
**474 Chemin de Sainte-Colombe**
**F-06140 Vence (FR)**

(72) Inventeur : **Blanchet, Michel**
**Chemin des Roures Quartier de la Sine**
**F-06140 Vence (FR)**
Inventeur : **Mario, Daniel**
**2003 Chemin du Pioulier**
**F-06140 Vence (FR)**

(74) Mandataire : **Rinuy, Santarelli**
**14, avenue de la Grande Armée**
**F-75017 Paris (FR)**

EP 0 324 697 B1

## Description

La présente invention vise un pressoir de denrées telles que glace, fruits ou légumes.

Dans l'état de la technique on connaît des pressoirs pour fruits ou légumes. Il existe en effet des appareils dits à "cône" comportant un élément conique fixe ou mobile que l'on fait chevaucher par le fruit préalablement coupé en deux. La pression avec laquelle est appliquée le fruit, combinée à la rotation du fruit ou du cône, permet d'extraire le jus de fruit. Ces appareils fonctionnent soit totalement manuellement, soit en semi-automatique ou en automatique, le cône étant alors animé d'un mouvement de rotation.

Quoique d'un fonctionnement globalement satisfaisant, ces appareils présentent un certain nombre d'insuffisances que l'invention se propose de pallier. En effet, ces appareils à cône sont limités à certains types de fruits et plus précisément ils sont limités aux agrumes. Plus encore, lorsque l'on souhaite un débit relativement important, ces appareils sont limités à un seul type d'agrume (par exemple oranges ou pamplemousses), le fruit utilisé devant de surcroît être calibré, ce qui en augmente le coût du jus de fruit. De plus, le débit de ces appareils n'est guère satisfaisant surtout si l'on sait que la demande de fruits frais pressés est en constante augmentation et que des débits importants, tels que par exemple plusieurs centaines de litres à l'heures sont demandés au pressoir, par exemple dans certains hôtels au moment du petit déjeûner.

Par ailleurs, on connaît des appareils du type centrifugeur dans lesquels on centrifuge des morceaux de fruits pour en extraire le jus. Ces appareils se caractérisent par un fort niveau de bruit et un prix élevé. Par ailleurs, il est connu que la qualité du jus de fruit obtenue est moins bonne, car le jus de fruit centrifugé est en général émulsionné, ce qui en dénature le goût. De plus la structure de l'appareil est passablement compliquée et comme il faut le nettoyer assez souvent, ce qui prend du temps, il en résulte une perte relative de rendement.

Le document FR-A-2.438.539 décrit une presse comportant un plateau de pressage commandé par des vérins ainsi qu'une grille. Ce dispositif de pressage n'est pas adapté pour une utilisation domestique ou dans la restauration.

Le document DE-B-1.231.861 vise un dispositif de pressage comportant un dispositif hydraulique de pressage comportant une membrane élastique destinée à éliminer le danger de contamination de la nourriture pressée par le liquide utilisé dans ce dispositif hydraulique.

Cette machine est de structure particlulièrement complexe et ne donne pas, dans toutes les hypothèses d'utilisation, un jus de bonne qualité.

Par ailleurs, les inventeurs se sont aperçu que pour certains fruits ou légumes, il est souhaitable que la force de pressage soit exercée selon plusieurs directions au cours de pressage.

La présente invention vise un pressoir destiné à permettre le pressage de fruits à grande cadence, simple d'emploi, permettant d'obtenir un jus de qualité au moins aussi bonne que dans les appareils à cône, de faible coût et susceptible d'équiper aussi bien des particuliers que des installations de cuisine pour collectivités ou des débits de boissons.

La présente invention vise également un pressoir de structure sensiblement plus simple que les structures ci-avant rappelées et présentant de surcroît d'une part une plus grande facilité d'emploi, notamment lors de son utilisation dans un bar ou dans un restaurant et, d'autre part un meilleur débit que les appareils de l'art antérieur.

A cet effet la présente invention vise un pressoir de denrées du genre comportant des moyens de pression destinés à agir sur la ou les denrée(s) à presser, comportant au moins une grille et au moins un plateau entre lesquels les denrées doivent être disposées, caractérisé en ce que des moyens d'action hydrauliques sont associés auxdits moyens de pression et agencés pour rapprocher la grille et le plateau, ces derniers exerçant ainsi, le cas échéant, une pression sur la ou les denrée(s), ces moyens d'action hydrauliques comportant au moins un vérin à simple effet actionné par une pompe hydraulique susceptible de fonctionner en pression et en dépression, tandis que le plateau est disposé sur un premier bras d'au moins un levier, le point d'appui de ce levier étant monté à rotation autour d'un axe et que les moyens d'action hydrauliques agissent sur le deuxième bras du levier.

Grâce à ces dispositions, on dispose d'un pressoir dans lequel les denrées ne sont pas centrifugées et où par conséquent le jus n'est pas émulsionné et garde son goût naturel. Le cône des appareils à cône n'est pas utilisé, ce qui permet à l'appareil selon l'invention d'être utilisé non seulement avec des agrumes mais également avec toutes sortes de fruits ou légumes tels que par exemple des ananas ou des tomates.

Grâce au montage du plateau sur au moins un levier, on obtient les avantages suivants :

– d'une part, on démultiple de manière connue en soi la force des moyens hydrauliques et on augmente ainsi la force de pressage tout en minimisant la consommation en énergie, et

– d'autre part, on exerce la pression de pressage selon un arc de cercle de telle sorte qu'en moyenne, la pression a une composante de direction verticale et une composante de direction horizontale.

Une telle disposition est particulièrement avantageuse s'agissant du pressage de certains fruits.

On observera ainsi que l'appareil selon l'invention peut être utilisé pour presser des ananas, le jus de ce fruit n'étant en général obtenu, dans l'art antérieur que par des centrifugeuses, et ne pouvant donc être produit par des particuliers ou des restaurateurs non équipés de telles centrifugeuses. De plus, la pression requise pour presser un tel fruit est assez élevée, ce qui est déjà difficilement possible dans l'art antérieur, mais en revanche est rendu possible avec la combinaison de moyens conforme à l'invention.

De même, l'appareil selon la présente invention peut être utilisé pour piler de la glace, ce qui n'est pas le cas des pressoirs de l'art antérieur analysés plus haut, entre autres pour les mêmes raisons.

Un autre avantage résultant de la suppression du cône réside dans le fait que la pulpe du fruit n'est pas arrachée mais, en revanche, est écrasée. Cette caractéristique se traduit par le fait que l'on évite d'avoir à nettoyer fréquemment la grille, alors que dans le cas d'un appareil à cône, la pulpe, arrachée, vient boucher le filtre associé à un tel appareil.

Les moyens mis en oeuvre sont particulièrement simples puisque les moyens d'action hydrauliques comportent essentiellement un ou plusieurs vérins à simple effet associés à une pompe de structure simple.

Ces moyens hydrauliques permettent d'obtenir une pression importante pour un faible coût en énergie, ce qui permet d'une part, d'améliorer la qualité du pressage des fruits et, d'autre part, de diminuer le coût de ce pressage en énergie. Par ailleurs, une action de pressage avec le dispositif selon l'invention peut se faire beaucoup plus rapidement, car on évite le positionnement d'un fruit sur un cône. En effet, avec le pressoir selon la présente invention, il suffit de couper le fruit en deux morceaux et de disposer ces derniers entre le plateau et la grille. Le rendement et le débit du pressage de fruit sont ainsi augmentés, ce qui est particulièrement appréciable.

On observera ici que les moyens hydrauliques utilisés sont particulièrement simples à mettre en oeuvre et de ce fait peu couteux.

En effet, conformément à l'invention on n'utilise qu'un au plusieurs vérins à simple effet associés à une pompe hydraulique susceptible de fonctionner en pression et en dépression.

Grâce à ces dispositions, après le pressage, la pompe s'inverse et le vérin revient en position de repos par effet de succion.

Avantageusement et dans un mode préféré de réalisation, un ressort permet d'accélérer ce retour. De ce fait, on augmente encore plus le débit du pressoir puisqu'en quelques secondes ce dernier est prêt à recevoir de nouvelles denrées après pressage des précédentes, le plateau revenant en position ouverte.

D'ailleurs, dans ce mode de réalisation préféré, un capteur de pression est disposé dans le circuit hydraulique, et est associé à des moyens permettant d'inverser le sens de rotation du moteur de la pompe lorsqu'un seuil de pression est atteint.

Ces dispositions garantissent une certaine sécurité dans l'emploi du pressoir conforme à l'invention et en facilitent encore plus son utilisation, puisque l'appareil est entièrement automatisé. Par ailleurs, en choisissant un seuil de pression suffisamment élevé, on est certain que certaines denrées particulièrement résistantes, telles que des ananas ou de la glace, auront pu être pressées avant que l'appareil revienne en position de repos.

La pompe utilisée est de structure simple puisqu'elle fonctionne dans son deuxième sens d'action, en dépression : il n'est donc pas besoin de prévoir dans un tel cas des moyens permettant de faire fonctionner cette pompe en pression dans chaque sens. De ce fait la présente invention permet de faire l'économie d'une pompe hydraulique fonctionnant en pression dans les deux sens, de vérins à double effet et d'un distributeur.

On observera de même que l'appareil selon la présente invention est particulièrement peu bruyant, ce qui n'est pas le cas des appareils de l'art antérieur et, notamment, des centrifugeuses.

Dans le mode de réalisation préféré, la grille est fixe, tandis que le plateau est mobile.

Pour utiliser le pressoir, il suffit en conséquence de disposer les denrées sur la grille, ces denrées étant pressées contre la grille par le plateau. Ces dispositions sont particulièrement simples et peu coûteuses à mettre en oeuvre.

Les caractéristiques et avantages de la présente invention ressortiront d'ailleurs de la description qui va suivre référence aux dessins annexés sur lesquels :
  – la figure 1 est une vue en perspective avec arrachement partiel d'un mode de réalisation d'un pressoir conforme à l'invention, et
  – la figure 2 est une vue schématique en coupe et en élévation latérale de ce pressoir.

Selon le mode de réalisation choisi et représenté aux figures, un pressoir 10 conforme à l'invention comporte un caisson formant structure porteuse 11 dans lequel sont disposés l'ensemble des moyens mis en oeuvre.

Conformément à l'invention, ces moyens comportent essentiellement au moins une grille 12 et au moins un plateau 13 entre lesquels les denrées 42 sont disposées ; des moyens d'action hydrauliques 15 sont associés aux moyens de pression constitués par le plateau 13 et la grille 12.

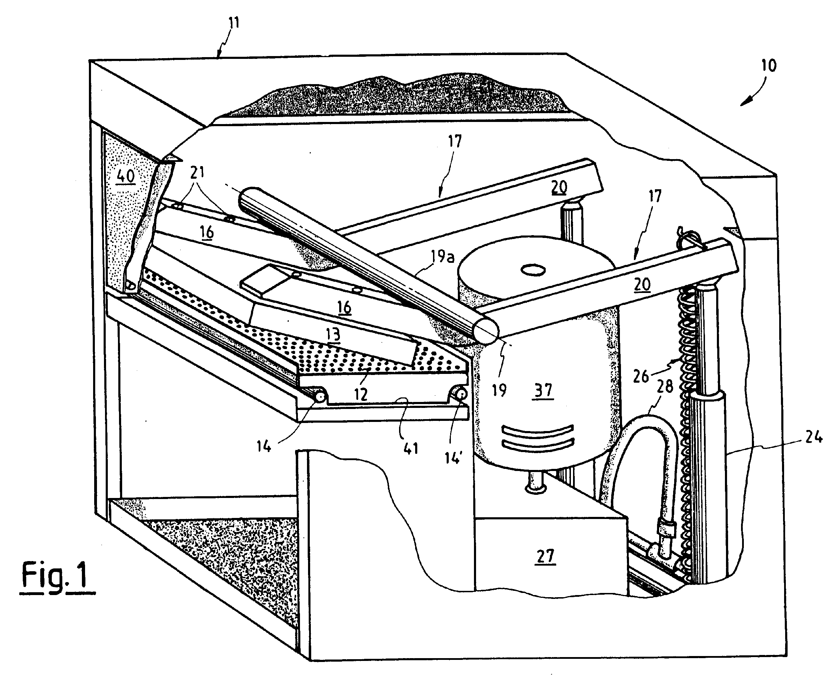

Dans le mode de réalisation choisi et représenté, un seul plateau et une seule grille sont prévus, le plateau 13 étant monté sur un premier bras 16 d'un levier 17 dont le point d'appui 18 est monté à rotation autour d'un axe 19. Les moyens d'action hydrauliques 15 agissent sur le deuxième bras 20 du levier 17. On observe, figure 1, que le plateau 13 est monté à chacune de ses deux extrémités sur le premier bras 16 de chacun de deux leviers 17. Dans le mode de réalisation choisi et représenté, ce montage se fait au moyen de vis 21. L'articulation du point d'appui 18 se fait au moyen d'une barre 19a soudée audit point d'appui 18 de chacun des leviers 17. Cette barre est montée articulée sur la structure porteuse 11, de façon connue en soit, ces moyens d'articulation n'ayant pas été représentés ici pour simplifier les dessins.

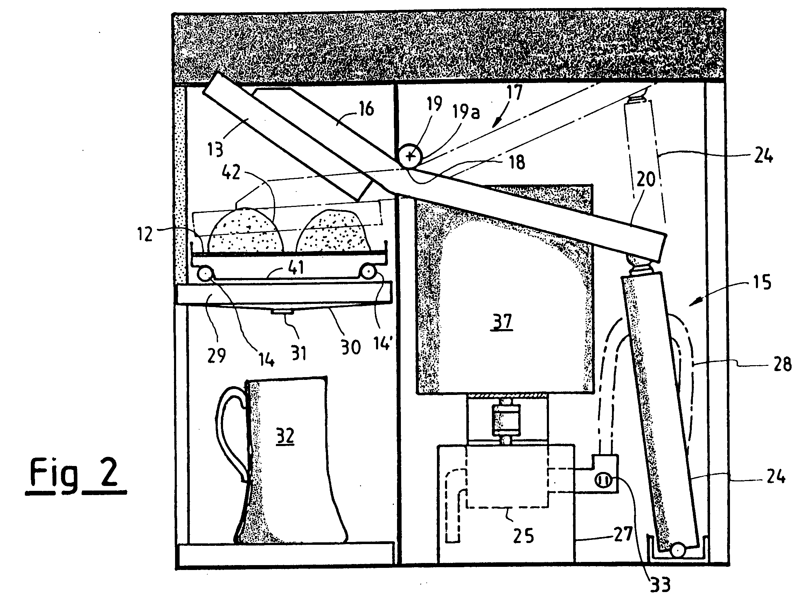

Dans le mode de réalisation choisi et représenté, les moyens d'action hydrauliques 15 comportent au moins un vérin 24, deux de ces vérins étant prévus ici et associés à chacun des leviers 17. Chacun des vérins 24 est un vérin à simple effet, tandis que les moyens d'action hydrauliques 15 comportent également une pompe réversible 25, c'est à dire susceptible de fonctionner en pression et en dépression. Dans le mode de réalisation représenté, il est prévu un ressort de rappel 26 du plateau 13 vers une position de repos, celle illustrée en figure 2, dans laquelle le plateau est en position relevée.

On observe, figure 2, que les moyens d'action hydrauliques comportent également un réservoir d'huile 27 d'un litre et des conduites d'huile 28 vers chacun des vérins 24.

Selon une autre caractéristique de l'invention, les moyens d'action hydrauliques 15 comportent également un capteur de pression 33 et des moyens de commande, non représentés, associés à ce capteur, destinés à inverser l'action de ces moyens hydrauliques, en l'espèce le sens de rotation du moteur 37 de la pompe 25, dès qu'un seuil de pression, ici 75 bars, est atteint.

Le pressoir représenté sur les figures comporte également, selon une autre caractéristique de l'invention, le montage de façon amovible de la grille 12. Dans ce mode de réalisation la grille 12 est en effet montée dans une structure 41 adaptée à reposer sur des entretoises de support 14, 14' solidaires du reste de la structure.

Les entretoises de support 14, 14' sont disposées au-dessus d'un bac de réception 29 présentant un fond 30 sensiblement en entonnoir, au centre duquel un orifice d'évacuation 31 est ménagé. Le bac 29 est également monté de façon amovible, les moyens de montage n'étant pas représentés sur cette figure pour en simplifier la compréhension.

Enfin une porte 40, représentée partiellement en figure 1 est ménagée en face avant pour éviter tout incident.

Le fonctionnement est le suivant :

On dispose sur la grille 12 les denrées 42. S'il s'agit d'agrumes, on coupe ces fruits en deux parties comme illustré schématiquement sur la figure 2 et on dispose le fruit avec la pulpe en contact sur la grille. Dès que les denrées sont disposées sur la grille, on enclenche un contact de sécurité, non représenté sur la figure. Ce contact de sécurité est d'ailleurs enclenché par la fermeture de la porte 40 en face frontale de l'appareil.

Dès qu'un contact marche est mis, à l'aide d'un bouton poussoir, non représentée, la pompe 25 est enclenchée et les vérins 24 entrent en action. Les vérins 24 agissent sur l'extrémité des seconds bras de levier 20 de chacun des leviers 17 qu'ils repoussent vers le haut comme illustré en traits mixtes sur la figure 2. De la sorte le plateau 13 s'abaisse et vient presser les denrées 14 comme illustré sur cette même figure. La figure 1 illustre aussi, en traits pleins, le plateau 13 dans sa position basse.

On observe que le plateau 13 se déplace entre la position haute illustrée en traits pleins et la position basse illustrée en traits mixtes selon une trajectoire circulaire. De ce fait, la force de pression sur les denrées 42 est exercée selon une direction variant la position du plateau. Elle présente en moyenne une composante selon la direction verticale et une composante selon la direction horizontale, ce qui améliore la qualité du pressage, s'agissant notamment de certains agrumes à pulpe.

Le jus de fruit traverse la grille 12, par les perforations qu'elle contient. Ce jus se trouve recueilli dans le bac 29 et s'écoule par l'orifice 31. Des moyens permettent de recueillir le jus de fruit en aval de l'orifice 31. Sur la figure 2, ces moyens ont été schématisés par une carafe 32.

Le pressoir selon l'invention peut être utilisé pour piler de la glace. A cet effet des cubes de glace sont disposés sur la grille et écrasés sur cette dernière par le plateau 13.

Dans le mode de réalisation représenté, les perforations de la grille étant circulaires, de faible diamètre (2 mm), la glace pilée ne traverse pas la grille 12 et est récupérée sur cette dernière.

Il est possible de prévoir une grille présentant le même aspect quE la grille 12 mais dont les trous ont un diamètre supérieur (par exemple 5 à 8 mm), ces trous comportant, éventuellement, une arête tranchante, ce qui favorise encore mieux le pilage de la glace. Dans ce cas, comme pour les fruits, la glace pilée traverse la grille et est récupérée dans le bac 29.

La pression dans le circuit hydraulique constituée par le réservoir 27, la pompe réversible 25, les conduites 28 et les vérins 24, est mesurée au moyen du capteur de pression 33. Dès qu'une pression nominale, en l'espèce 75 bars, est atteinte, l'inversion de la pompe 25 est commandée et le plateau revient en position haute comme illustré en traits pleins sur la figure 2. De la sorte, on peut évacuer les denrées pressées et les remplacer par d'autres denrées.

On notera ici qu'en phase finale en pression les vérins hydrauliques 24 étant sous pression, ils font fonction d'accumulateurs de pression hydraulique et participent de ce fait au renvoi du fluide vers la pompe celle-ci devenant récepteur pour un instant de raison, au moment de l'inversion électrique. Cette caractéristique favorise l'inversion du moteur de la pompe 25. Pendant la phase de retour du plateau en position de repos, la pompe fonctionne comme pompe à dépression.

Grâce à cet agencement il est possible d'utiliser comme moteur de pompe un moteur électrique monophasé 37 dont l'homme de l'art sait qu'il est difficile d'obtenir l'inversion de son sens de rotation simultanément à l'inversion électrique. De ce fait, on peut éviter l'emploi d'un moteur triphasé normalement plus couteux dans sa mise en oeuvre et dans son utilisation.

Dans le mode de réalisation choisi et représenté, le temps total entre l'enclenchement de la pompe pour le pressage, le pressage en tant que tel et le retour du plateau en position de repos est de l'ordre de 5 secondes. Les utilisateurs apprécieront le gain de temps utilisé pour presser des fruits tels que des pamplemousses ou des ananas, ou, encore, piler de la glace.

Dans la mode de réalisation choisi et représenté, chacun des vérins 24 présente un diamètre total de 20 mm. Le ressort de rappel 26, qui est associé à l'un seulement des vérins dans le mode de réalisation choisi et représenté, permet d'accélérer le temps de retour du plateau 13 vers sa position de repos, ce retour étant d'ailleurs favorisé par l'inversion de la pompe 25, ce qui crée un effet de succion à l'intérieur du corps de vérin 24.

Les dimensions de l'appareil sont notamment de 40 cm de hauteur pour 26 cm de largeur, ce qui permet, dans l'appareil choisi et représenté, de disposer deux demi-pamplemousses ou un demi-ananas de taille normale sur la grille en vue d'être pressés.

Bien entendu la présente invention ne se limite nullement au mode de réalisation choisi et représenté mais englobe, bien au contraire, toutes variantes.

## Revendications

1. Pressoir de denrées du genre comportant des moyens de pression destinés à agir sur la ou les denrée(s) à presser, comportant au moins une grille (12) et au moins un plateau (13) entre lesquels les denrées (42) doivent être disposées, caractérisé en ce que des moyens d'action hydrauliques (15) sont associés auxdits moyens de pression et agencés pour rapprocher la grille et le plateau, ces derniers exerçant ainsi, le cas échéant, une pression sur la ou les denrée(s), ces moyens d'action hydrauliques (15) comportant au moins un vérin (24) à simple effet actionné par une pompe hydraulique (25) susceptible de fonctionner en pression et en dépression, tandis que le plateau (13) est disposé sur un premier bras (16) d'au moins un levier (17), le point d'appui (18) de ce levier étant monté à rotation autour d'un axe (19) et que les moyens d'action hydrauliques (15) agissent sur le deuxième bras (20) du levier.

2. Pressoir selon la revendication 1, caractérisé en ce qu'il comporte, associé audit vérin (24), au moins un ressort de rappel (26) du plateau (13) vers une position dite "de repos".

3. Pressoir selon l'une quelconque des revendications 1 et 2, caractérisé en ce que les moyens d'action hydrauliques (15) comportent un capteur (33) de pression et des moyens de commande associés à ce capteur pour inverser l'action de la pompe commandant le vérin à simple effet (24) dès qu'un seuil de pression est atteint.

4. Pressoir selon l'une quelconque des revendications 1 à 3, caractérisé en ce que la grille (12) est fixe tandis que le plateau (13) est mobile.

5. Pressoir selon l'une quelconque des revendications 1 à 4, caractérisé en ce que la grille (12) est monté de façon amovible.

6. Pressoir selon l'une quelconque des revendications 1 à 5, caractérisé en ce que la grille (12) présente une pluralité de perforations.

7. Pressoir selon la revendication 6, caractérisé en ce que chacune des perforations comporte une arête tranchante.

8. Pressoir selon l'une quelconque des revendications 1 à 7, caractérisé en ce que la pompe (25) comporte un moteur électrique monophasé (37).

## Patentansprüche

1. Presse für Nahrungsmittel mit Preßeinrichtungen, die dazu bestimmt sind, auf das oder die zu pressenden Nahrungsmittel einzuwirken, und wenigstens einen Rost (12) und wenigstens eine Platte (13) umfassen, zwischen denen die Nahrungsmittel (42) angeordnet sein müssen, dadurch gekennzeichnet, daß den Preßeinrichtungen hydraulische Wirkeinrichtungen (15) zugeordnet sind, die den Rost und die Platte einander nähern können, die auf diese Weise im gegebenen Fall einen Druck auf das oder die Nahrungsmittel ausüben, wobei die hydraulischen Wirkeinrichtungen (15) wenigstens eine einfach wirkende Kolben-Zylinder-Einheit (24) umfassen, die durch eine hydraulische Pumpe (25) betätigt ist, die auf Druck und auf Unterdruck arbeiten kann, während die Platte (13) auf einem ersten Arm (16) wenigstens eines Hebels (17) angeordnet ist, dessen Abstützungspunkt (18) um eine Achse (19) drehbar montiert ist, und die hydraulischen Wirkeinrichtungen (15) auf den zweiten Arm (20) des Hebels einwirken.

2. Presse nach Anspruch 1, dadurch gekennzeichnet, daß sie wenigstens eine der Kolben-Zylinder-Einheit (24) zugeordnete Rückholfeder (26) zur Rückholung der Platte (13) in eine sog. Ruhestellung umfaßt.

3. Presse nach einem der Ansprüche 1 und 2, dadurch gekennzeichnet, daß die hydraulischen Wirkeinrichtungen (15) einen Druckfühler (33) und diesem zugeordnete Steuereinrichtungen umfassen, um die Wirkung der die einfach wirkende Kolben-Zylinder-Einheit (24) antreibenden Pumpe umzukehren, sobald eine Druckschwelle erreicht ist.

4. Presse nach einem der Ansprüche 1 bis 3, dadurch gekennzeichnet, daß der Rost (12) feststehend ist, während die Platte (13) beweglich ist.

5. Presse nach einem der Ansprüche 1 bis 4, dadurch gekennzeichnet, daß der Rost (12) abnehmbar montiert ist.

6. Presse nach einem der Ansprüche 1 bis 5, dadurch gekennzeichnet, daß der Rost (12) eine Vielzahl von Perforationen aufweist.

7. Presse nach Anspruch 6, dadurch gekennzeichnet, daß jede der Perforationen eine Schneidkante aufweist.

8. Presse nach einem der Ansprüche 1 bis 7, dadurch gekennzeichnet, daß die Pumpe (25) einen einphasigen Elektromotor (37) umfaßt.

## Claims

1. Food press of the kind comprising pressing means adapted to operate on the food(s) to be pressed comprising at least one grid (12) and at least one plate (13) between which the food(s) (42) must be disposed, characterised in that hydraulic operating means (15) are associated with said pressing means and adapted to move the grid and the plate towards each other so that they exert pressure on the food(s), the hydraulic operating means (15) comprising at least one single-acting piston-and-cylinder actuator (24) operated by a hydraulic pump (25) adapted to operate in compression and in suction whereas the plate (13) is disposed on a first arm (16) of at least one lever (17) and the fulcrum (18) of the lever is mounted to rotate about an axis (19) and the hydraulic operating means (15) operate on the second arm (20) of the lever.

2. Press according to claim 1 characterised in that it comprises, associated with said actuator (24), at least one spring (26) for returning the plate (13) to a so-called "rest" position.

3. Press according to claim 1 or claim 2 characterised in that the hydraulic operating means (15) comprise a pressure sensor (33) and control means associated with the sensor for reversing the pump driving the single-acting actuator (24) immediately a pressure threshold is reached.

4. Press according to any one of claims 1 through 3 characterised in that the grid (12) is fixed and the plate (13) is mobile.

5. Press according to any one of claims 1 through 4 characterised in that the grid (12) is removable.

6. Press according to any one of claims 1 through 5 characterised in that the grid (12) comprises a plurality of perforations.

7. Press according to claim 6 characterised in that each of the perforations has a cutting edge.

8. Press according to any one of claims 1 through 7 characterised in that the pump (25) incorporates a single-phase electric motor (37).

Fig.1

Fig 2